# DEMANDE DE BREVET EUROPEEN

(11) **EP 2 402 242 A1**
(43) Date de publication de la demande: **04.01.2012**
(21) Numéro de dépôt: 11172266.6
(22) Date de dépôt: 30.06.2011
(51) Int. Cl.: B62K 25/28

(54) **Geometrie de velo optimisee**

(30) Priorité: 01.07.2010 FR 1002763
(71) Demandeur: Weite, Jérôme, 69007 Lyon (FR)
(72) Inventeur: Weite, Jérôme, 69007 Lyon (FR)
(74) Mandataire: Guérin, Jean-Philippe

(57) **Abrégé**

L'invention concerne un vélo, comprenant :
-un cadre avant (1) supportant un ensemble de direction (11 ) ;
-un pédalier (9) ;
-une roue arrière (8) ;
-un amortisseur (7) ;
-un triangle arrière (3) comportant des premier, deuxième et troisième éléments de liaison pivot, le pédalier (9) étant monté pivotant sur le triangle arrière (3) par l'intermédiaire du premier élément de liaison pivot, le cadre avant (1) étant monté pivotant sur le triangle arrière (3) par l'intermédiaire du deuxième élément de liaison pivot, la roue arrière (8) étant montée pivotante sur le triangle arrière (3) par l'intermédiaire du troisième élément de liaison pivot, le triangle arrière (3) formant une liaison rigide entre les premier, deuxième et troisième éléments de liaison pivot.

Le premier élément de liaison pivot est connecté au cadre avant (1) et à l'amortisseur (7) par l'intermédiaire d'un ensemble biellette/basculeur (6a, 6b).

## Description

La présente invention concerne de façon générale les vélos, et en particulier les vélos comportant une suspension arrière qui supporte la roue arrière, dans laquelle le pédalier est solidaire de cette suspension, et dans laquelle cette suspension est amortie par rapport à une partie avant de cadre.

On appelle suspension arrière le système de bras qui relie la roue arrière à la partie avant du cadre par l'intermédiaire d'articulations et d'éléments élastiques et amortissant.

Les cadres à suspension ont pour but d'apporter du confort, de la stabilité et de la motricité tout en offrant une bonne retransmission de l'effort de pédalage, c'est-à-dire la qualité qui consiste à transformer l'énergie fournie par l'effort de pédalage du cycliste en vitesse de déplacement.

De façon générale, pour limiter les interactions entre le fonctionnement de la suspension et la transmission par chaîne, il faut limiter les variations de longueur de chaîne.

Par ailleurs, chaque impulsion sur les pédales induit une augmentation de la poussée motrice qui provoque un report de charge vers l'arrière du vélo. Ce report de charge vers l'arrière fait fléchir la suspension arrière du vélo et ainsi dissipe l'effort de pédalage dans l'amortisseur prévu normalement pour dissiper l'énergie des impacts des obstacles sur la roue.

Dans la description qui suit, l'axe horizontal du vélo est l'axe passant par les points de contacts des pneus sur le sol quand le vélo est posé sur une surface plane. L'axe vertical est l'axe du plan du vélo perpendiculaire à l'axe horizontal.

Les cadres avec le pédalier sur la partie avant et une suspension à pivot unique (ou à point de pivot virtuel) ne permettent pas d'avoir une totale indépendance du fonctionnement de la suspension et de la transmission de l'effort de pédalage. Si le constructeur choisit un positionnement du point de pivot près du point de contact de la chaîne sur le petit plateau, ce qui limite les variations de longueur de chaîne lors du travail de la suspension, l'action du cycliste sur les pédales provoque des flexions de la suspension, appelées pompage, qui dissipent une partie de l'énergie de pédalage du cycliste dans la compression et la détente de l'amortisseur.

Si le constructeur choisit un positionnement du point de pivot plus élevé pour limiter le pompage, la tension de la chaîne fait apparaître des interactions négatives entre le travail de la suspension et la tension de la chaîne, particulièrement sur le petit plateau ou le moyen plateau le cas échéant, et perturbe à la fois le fonctionnement de la suspension et le pédalage du cycliste.

Afin de limiter le pompage tout en conservant une bonne indépendance entre le travail de la suspension et la transmission, ces cadres utilisent souvent une précontrainte et un freinage hydraulique en compression de l'amortisseur mais ceux-ci limitent le travail de la suspension.

Pour tous les cadres avec le pédalier sur la partie avant, la position de la selle et la position du pédalier par rapport au point de pivot font que les forces appliquées sur le pédalier compriment moins la suspension que les efforts appliqués sur la selle. Cela a pour conséquence de rendre la suspension un peu moins sensible quand le cycliste est debout sur les pédales et, en particulier, de faire perdre en motricité et en adhérence lorsque le cycliste monte « en danseuse ».

Il existe une autre catégorie de cadres que l'on appelle triangles arrière unifiés et qui sont caractérisés par le fait de ne pas avoir de point de pivot entre la roue arrière et le boîtier de pédalier. Le triangle arrière est dit unifié car le pédalier est relié de façon rigide sur le bras de suspension qui supporte la roue arrière. De ce fait, ces cadres ne posent pas plus de problèmes avec la transmission par chaîne que des cadres sans suspension et permettent de positionner le pivot entre la suspension et le cadre avant sans avoir de problèmes de variations de longueur de chaîne.

Le document US2005/0057018 décrit un exemple d'un tel vélo. La suspension d'un tel vélo est montée pivotante sur le cadre avant par un pivot bas très proche de l'axe du pédalier. Un tel vélo a pour intérêt d'être facile et peu coûteux à construire. Cependant, un tel vélo pompe beaucoup dès que le réglage de la suspension apporte un peu de confort.

L'invention vise à répondre à un ou plusieurs des inconvénients rencontrés. L'invention porte ainsi sur un vélo comprenant :
- un cadre avant supportant un ensemble de direction ;
- un pédalier ;
- une roue arrière ;
- un amortisseur ;
- un triangle arrière comportant des premier, deuxième et troisième éléments de liaison pivot selon trois axes transversaux colinéaires et distants, le pédalier étant monté pivotant sur le triangle arrière par l'intermédiaire du premier élément de liaison pivot, le cadre avant étant monté pivotant sur le triangle arrière par l'intermédiaire du deuxième élément de liaison pivot, la roue arrière étant montée pivotante sur le triangle arrière par l'intermédiaire du troisième élément de liaison pivot, le triangle arrière formant une liaison rigide entre les premier, deuxième et troisième éléments de liaison pivot.

Le premier élément de liaison pivot est connecté au cadre avant et à l'amortisseur par l'intermédiaire d'un ensemble biellette/basculeur.

Selon une variante, l'ensemble de direction comporte une fourche montée pivotante par rapport au cadre avant autour d'un axe, l'angle entre cet axe et la direction reliant les deuxième et troisième éléments de liaison pivot étant compris entre 80 ° et 90 °, de préférence entre 85 ° et 90 °, lorsque l'amortisseur est comprimé entre 20 et 40% de sa course.

Selon une autre variante, la direction reliant les deuxième et troisième éléments de liaison pivot forme un angle compris entre 25° et 38° par rapport à l'horizontale lorsque le vélo est au repos.

Selon une variante, ledit deuxième élément de liaison pivot est disposé entre 160 et 240 mm au-dessus du premier élément de liaison pivot.

Selon encore une variante, ledit deuxième élément de liaison pivot est disposé plus de 160 mm au-dessus du troisième élément de liaison pivot lorsque le vélo est au repos.

Selon une autre variante, ledit deuxième élément de liaison pivot est disposé moins de 240 mm au-dessus du troisième élément de liaison pivot lorsque le vélo est au repos.

Selon encore une autre variante, le vélo comprend une selle fixée sur le cadre avant, le premier élément de liaison pivot, le deuxième élément de liaison pivot et la selle étant sensiblement alignés.

Selon une variante, ledit deuxième élément de liaison pivot est disposé en arrière par rapport audit premier élément de liaison pivot.

Selon une autre variante, la direction passant par les premier et deuxième éléments de liaison pivot forme un angle inférieur à 76° avec l'horizontale.

Selon une autre variante, la biellette comporte une première extrémité montée pivotante sur le triangle arrière à proximité du deuxième élément de liaison pivot et une deuxième extrémité montée pivotante sur un premier axe du basculeur, le basculeur comportant un deuxième axe sur lequel une première extrémité de l'amortisseur est montée pivotante, le basculeur comportant un troisième axe sur lequel le cadre avant est monté pivotant, le troisième axe étant disposé entre les premier et deuxième axes du basculeur, une deuxième extrémité de l'amortisseur étant montée pivotante sur le cadre avant.

Selon encore une variante, l'angle formé lorsque le vélo est au repos entre la direction joignant les première et deuxième extrémités de la biellette et la direction joignant les premier et deuxième axes du basculeur est compris entre 15 ° et 55 °.

Selon encore une autre variante, le vélo est configuré pour la pratique du tout-terrain.

D'autres caractéristiques et avantages de l'invention ressortiront clairement de la description qui en est faite ci-après, à titre indicatif et nullement limitatif, en référence aux dessins annexés, dans lesquels :
- La figure 1 représente en vue de côté un schéma de vélo au repos selon un mode de réalisation de l'invention ;
- La figure 2 est une vue éclatée du vélo de la figure 1 illustrant plus précisément différents composants ;
- La figure 3 le vélo de la figure 1 dans une configuration où la suspension arrière est intégralement comprimée ;
- La figure 4 est une représentation agrandie d'un exemple d'ensemble biellette/basculeur.

La géométrie de vélo selon l'invention permet de cumuler divers avantages :
- Une optimisation de la transmission de l'effort de pédalage grâce à l'optimisation de la résistance de la suspension à la traction de la chaîne et une forte réduction ou une suppression du pompage même pour les grands débattements.
- La suppression des interactions négatives entre la suspension et la transmission par chaîne et un fonctionnement identique de la suspension sur tous les rapports de vitesse.
- L'augmentation de l'effet des forces appliquées au pédalier sous les chocs pour comprimer la suspension et l'augmentation du confort des membres inférieurs du cycliste et l'amélioration de la motricité quand celui-ci pédale debout.
- Une très grande progressivité de la suspension qui permet d'avoir une très grande sensibilité sur les petits chocs sans risquer de venir en butée sur les plus gros chocs même pour les petits débattements.
- La possibilité d'avoir un triangle avant bas dit « sloping » qui permet des mouvements aisés du cycliste dans les passages raides ou accidentés.
- L'obtention d'un centre de gravité bas pour le cadre du vélo qui améliore la stabilité et la maniabilité du vélo.
- Une limitation de la variation de distance selle/pédalier lors du travail de suspension.

Un vélo selon l'invention est construit autour d'un cadre articulé équipé d'une suspension arrière 2. L'invention s'applique tout particulièrement à un vélo configuré pour la pratique du tout-terrain.

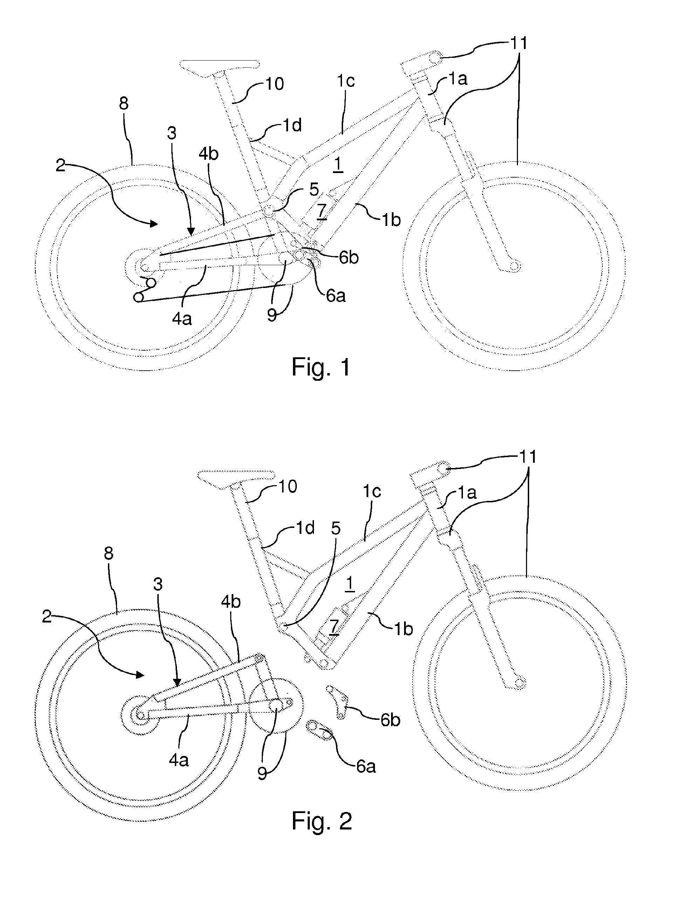

Ce cadre du vélo selon un mode de réalisation illustré à la figure 1 comprend une partie avant 1 de cadre qui comporte un tube de direction 1 a. La partie avant 1 comprend un tube diagonal 1 b, un tube supérieur 1 c et un tube de selle 1 d. Ce cadre comprend également un ensemble de suspension arrière 2 qui comporte un triangle ou des bras de suspension arrière 3. Le triangle arrière 3 comprend des bases (fixation inférieure) 4a et des haubans (fixation supérieure) 4b, entre lesquels la roue arrière 8 du vélo est disposée. La roue arrière 8 est fixée sur le triangle arrière 3. Un pédalier 9 permet d'entraîner la roue arrière en rotation par l'intermédiaire d'une chaîne de transmission. La partie avant 1 forme un élément rigide entre le tube de direction 1 a et la liaison avec le triangle arrière 3.

Le triangle arrière 3 est ainsi monté pivotant par rapport à la partie avant 1 au niveau d'une articulation 5, autour d'un axe transversal au vélo. Le triangle arrière 3 est également relié à la partie avant par un système déformable associant une biellette 6a et un basculeur 6b montés pivotants l'un par rapport à l'autre et un système élastique et amortissant 7 (combiné ressort-amortisseur). Le combiné 7 présente une extrémité montée pivotante sur la partie avant 1 et une autre extrémité montée pivotante sur un axe du basculeur 6b.

Le vélo comprend en outre une selle et une tige de selle 10, un ensemble de direction 11 incluant un guidon, une suspension avant et une roue avant. L'ensemble de direction 11 est monté pivotant par rapport à la partie avant 1 par l'intermédiaire du tube de direction 1a, autour d'un axe généralement proche de 70°par rapport à l'horizontale.

La description du vélo ne sera pas plus détaillée en ce qui concerne divers composants du vélo sans lien direct avec l'invention, notamment le pédalier, les pédales, la suspension avant, les systèmes de freinage, la transmission par chaîne ou les dérailleurs.

Le triangle arrière 3 présente trois éléments de liaison pivot. Ces trois éléments de liaison pivot sont destinés à permettre un pivotement de différents composants du vélo par rapport au triangle arrière 3, selon des axes transversaux colinéaires et non confondus.

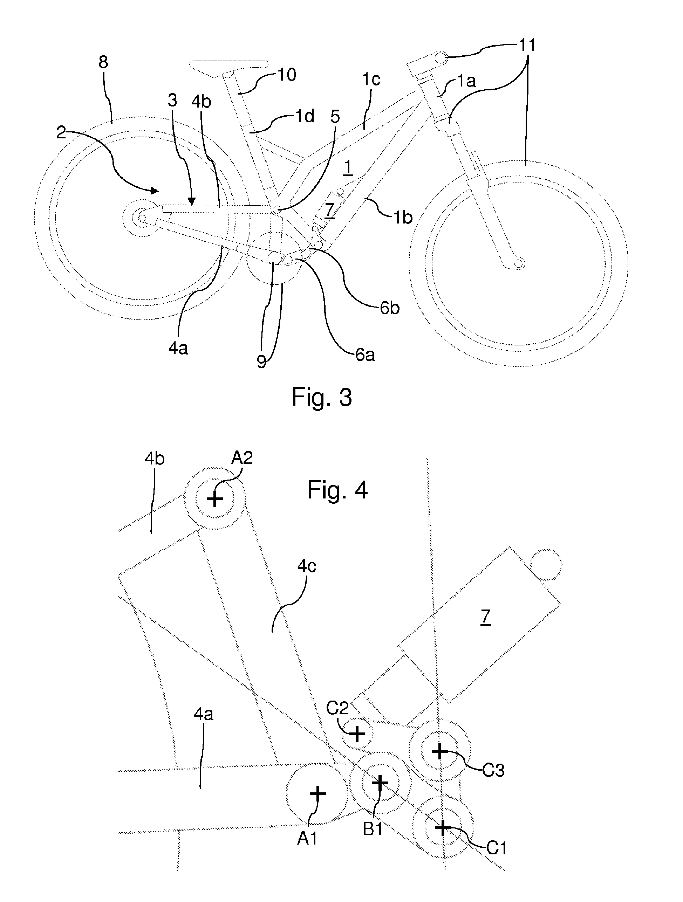

Un premier élément de liaison pivot est par exemple un alésage transversal permettant de monter le pédalier 9 à rotation sur le triangle arrière 3 par l'intermédiaire de roulements. L'axe de rotation du pédalier 9 est illustré par l'axe A1 à la figure 4.

Un deuxième élément de liaison pivot est monté pivotant sur la partie avant 1 du cadre. L'axe de rotation du triangle arrière 3 par rapport à la partie avant 1 est illustré par l'axe A2 à la figure 4. Le deuxième élément de liaison pivot est par exemple un arbre transversal rapporté sur le triangle arrière 3.

Un troisième élément de liaison pivot est ménagé sur l'extrémité arrière du triangle arrière 3. Ce troisième élément de liaison pivot est destiné à permettre le montage à rotation de la roue arrière 8. Ce troisième élément de liaison pivot peut-être formée de fentes ménagées dans des pattes aux jonctions des haubans 4b et des bases 4a. De telles fentes permettent le montage d'un axe de roue de façon connue en soi.

Le triangle arrière 3 forme une liaison rigide entre les premier, deuxième et troisième éléments de liaison pivot. En l'occurrence, les bases 4a forment une liaison rigide entre les premier et troisième éléments de liaison pivot et les haubans 4b forment une liaison rigide entre les deuxième et troisième éléments de liaison pivot. Un tube 4c du triangle arrière 3 forme une liaison rigide entre les premier et deuxième éléments de liaison pivot.

Le premier élément de liaison pivot est connecté à la partie avant 1 et à l'amortisseur 7 par l'intermédiaire de l'ensemble biellette 6a et basculeur 6b. La biellette 6a est montée pivotante par une première extrémité autour d'un axe B1, sur un quatrième élément de liaison pivot du triangle arrière 3. La biellette 6a est montée pivotante par une deuxième extrémité sur un arbre du basculeur 6b autour d'un axe transversal C1. La première extrémité de l'amortisseur 7 est montée pivotante sur un arbre du basculeur 6b autour d'un axe transversal C2. Le basculeur 6b est monté pivotant à une extrémité du tube diagonal 1 b autour d'un axe transversal C3. Le troisième axe C3 est disposé dans une position intermédiaire entre les premier et deuxième axes C1 et C2 du basculeur 6b. Les axes C1 et C2 sont disposés sur des extrémités opposées du basculeur 6b. La deuxième extrémité de l'amortisseur 7 est montée pivotante sur le tube diagonal 1 b.

L'utilisation de l'ensemble biellette/basculeur permet d'obtenir un système d'amortissement très compact, fournissant une grande liberté de placement pour le deuxième élément de liaison pivot du triangle arrière 3. La position verticale de l'axe A2 peut notamment être définie avec un minimum de contraintes.

Dans un souci de compacité et de précision de l'amortissement, l'axe B1 est avantageusement disposé à proximité de l'axe A1, par exemple à une distance inférieure à 90 mm. Les axes A1, B1 et le troisième élément de liaison pivot sont avantageusement alignés. L'axe B1 est avantageusement disposé à l'avant de l'axe A1.

L'homme du métier saura déterminer un rapport satisfaisant entre le débattement à la roue 8 et la course de l'amortisseur 7, en fonction de la géométrie de l'ensemble biellette/basculeur et de la progressivité de l'amortissement souhaitée.

Avantageusement, l'angle formé lorsque le vélo est au repos entre la direction joignant les axes B1 et B2 de la biellette 6a et la direction joignant les premier et deuxième axes du basculeur 6b est compris entre 15° et 55°. On obtient ainsi un rapport élevé entre le débattement au niveau de la roue 8 et la course de l'amortisseur, ce qui permet d'obtenir une très bonne sensibilité de la suspension en début de débattement. Lorsque la suspension est au maximum de sa compression, cet angle pourra avantageusement être compris entre 150⁰ ° et 178°. On obtient ainsi une suspension relativement dure qui permet d'éviter de talonner en compression. On utilise avantageusement des entraxes compris entre 45 et 100mm entre l'axe C1 et l'axe C3 ou entre l'axe C2 et l'axe C3.

Avantageusement, la fourche de l'ensemble de direction 11 est montée pivotante par rapport à la partie avant 1 autour d'un axe, l'angle entre cet axe et la direction reliant les deuxième et troisième axes du triangle arrière 3 étant compris entre 80 ° et 90 °, de préférence entre 85 ° et 90 ° (lorsque l'amortisseur 7 est comprimé entre 20 et 40% de sa course). De tels paramètres permettent de limiter la variation de l'empattement du vélo lors de la compression de la suspension qui peut être à l'origine d'importantes pertes d'adhérence de la roue avant.

De préférence, la direction reliant les deuxième et troisième axes du triangle arrière 3 forme un angle compris entre 25° et 38° par rapport à l'horizontale lorsque le vélo est au repos. Lorsque la suspension arrière comporte un débattement compris entre 100 et 150 mm, cet angle est avantageusement compris entre 28° et 34° au repos. Lorsque la suspension arrière comporte un débattement compris entre 150 et 250 mm, cet angle est avantageusement compris entre 30 ° et 36 ° au repos.

Avantageusement, le deuxième axe A2 du triangle arrière 3 est disposé plus de 160 mm au-dessus du troisième axe du triangle arrière lorsque le vélo est au repos. Lorsque la suspension arrière comporte un débattement compris entre 100 et 150 mm, le deuxième axe A2 est de préférence disposé plus de 185 mm au-dessus du troisième axe (par exemple entre 185 et 235 mm au-dessus) lorsque le vélo est au repos. Lorsque la suspension arrière comporte un débattement compris entre 150 et 250 mm, le deuxième axe A2 est de préférence disposé plus de 200 mm au-dessus du troisième axe lorsque le vélo est au repos. Le deuxième axe est avantageusement disposé à moins de 240mm au-dessus du troisième axe lorsque le vélo est au repos. Une telle disposition est à la fois suffisamment élevée pour garantir une motricité atténuant suffisamment le pompage et à la fois suffisamment basse pour limiter les déplacements (longitudinaux) du pédalier 9, notamment par rapport à la selle, durant les mouvements du triangle arrière 3. Le comportement du vélo n'est donc pas altéré, selon que le cycliste est debout sur les pédales ou en appui sur la selle.

Avantageusement, le deuxième axe A2 du triangle arrière 3 est disposé plus de 160 mm au-dessus du premier axe A1 du triangle arrière lorsque le vélo est au repos, et de préférence disposé à moins de 240 mm au-dessus de ce premier axe A1 lorsque le vélo est au repos.

Avantageusement, le deuxième axe A2 du triangle arrière 3 est disposé en arrière par rapport audit premier axe A1.

La direction passant par les axes A1 et A2 du triangle arrière 3 forme avantageusement un angle inférieur à 76° avec l'horizontale, et de préférence inférieur à 73 o.

Avantageusement, le premier axe A1, le deuxième axe A2 et la selle ou la tige de selle 10 sont sensiblement alignés. Le déplacement du pédalier 9 lors d'une compression de la suspension est ainsi moins sensible pour le cycliste assis, comme cela est illustré dans la configuration de la figure 3.

Bien qu'on ait illustré un amortisseur 7 sensiblement aligné avec le tube diagonal 1 b, d'autres configurations peuvent bien entendu être envisagées, en alignant par exemple l'amortisseur 7 avec le tube de selle 1 d, en le solidarisant au tube supérieur 1 c ou sur tout autre élément de la partie avant 1.

## Revendications

1. Vélo, comprenant :
- un cadre avant (1) supportant un ensemble de direction (11 ) ;
- un pédalier (9) ;
- une roue arrière (8) ;
- un amortisseur (7) ;
- un triangle arrière (3) comportant des premier, deuxième et troisième éléments de liaison pivot selon trois axes transversaux colinéaires et distants, le pédalier (9) étant monté pivotant sur le triangle arrière (3) par l'intermédiaire du premier élément de liaison pivot, le cadre avant (1) étant monté pivotant sur le triangle arrière (3) par l'intermédiaire du deuxième élément de liaison pivot, la roue arrière (8) étant montée pivotante sur le triangle arrière (3) par l'intermédiaire du troisième élément de liaison pivot, le triangle arrière (3) formant une liaison rigide entre les premier, deuxième et troisième éléments de liaison pivot ;
**Caractérisé en ce que** :
- le premier élément de liaison pivot est connecté au cadre avant (1 ) et à l'amortisseur (7) par l'intermédiaire d'un ensemble biellette/basculeur (6a, 6b).

2. Vélo selon la revendication 1, dans lequel l'ensemble de direction (11 ) comporte une fourche montée pivotante par rapport au cadre avant (1) autour d'un axe, l'angle entre cet axe et la direction reliant les deuxième et troisième éléments de liaison pivot étant compris entre 80° et 90°, de préférence entre 85° et 90°, lorsque l'amortisseur (7) est comprimé entre 20 et 40% de sa course.

3. Vélo selon la revendication 2, dans lequel la direction reliant les deuxième et troisième éléments de liaison pivot forme un angle compris entre 25° et 38° par rapport à l'horizontale lorsque le vélo est au repos.

4. Vélo selon l'une quelconque des revendications précédentes, dans lequel ledit deuxième élément de liaison pivot est disposé entre 160 et 240 mm au-dessus du premier élément de liaison pivot.

5. Vélo selon l'une quelconque des revendications précédentes, dans lequel ledit deuxième élément de liaison pivot est disposé plus de 160 mm au-dessus du troisième élément de liaison pivot lorsque le vélo est au repos.

6. Vélo selon la revendication 5, dans lequel ledit deuxième élément de liaison pivot est disposé moins de 240 mm au-dessus du troisième élément de liaison pivot lorsque le vélo est au repos.

7. Vélo selon l'une quelconque des revendications précédentes, comprenant une selle (10) fixée sur le cadre avant (1), dans lequel le premier élément de liaison pivot, le deuxième élément de liaison pivot et la selle sont sensiblement alignés.

8. Vélo selon la revendication 7, dans lequel ledit deuxième élément de liaison pivot est disposé en arrière par rapport audit premier élément de liaison pivot.

9. Vélo selon la revendication 7 ou 8, dans lequel la direction passant par les premier et deuxième éléments de liaison pivot forme un angle inférieur à 76° avec l'horizontale.

10. Vélo selon l'une quelconque des revendications précédentes, dans lequel la biellette (6a) comporte une première extrémité (B1) montée pivotante sur le triangle arrière (3) à proximité du deuxième élément de liaison pivot et une deuxième extrémité (B2) montée pivotante sur un premier axe du basculeur (6b), le basculeur comportant un deuxième axe (C2) sur lequel une première extrémité de l'amortisseur (7) est montée pivotante, le basculeur comportant un troisième axe (C3) sur lequel le cadre avant (1) est monté pivotant, le troisième axe étant disposé entre les premier et deuxième axes du basculeur (6b), une deuxième extrémité de l'amortisseur étant montée pivotante sur le cadre avant (1).

11. Vélo selon la revendication 10, dans lequel l'angle formé lorsque le vélo est au repos entre la direction joignant les première et deuxième extrémités de la biellette et la direction joignant les premier et deuxième axes du basculeur est compris entre 15 ° et 55 °.

12. Vélo selon l'une quelconque des revendications précédentes, configuré pour la pratique du tout-terrain.
